# EUROPEAN PATENT SPECIFICATION

(11) **EP 2 339 857 B1**
(45) Date of publication and mention of the grant of the patent: **26.12.2012**
(21) Application number: 10190024.9
(22) Date of filing: 04.11.2010
(51) Int. Cl.: H04N 13/04

(54) **Stereoscopic glasses, display device and driving method of the same**
Stereoskopische Gläser, Anzeigevorrichtung und Ansteuerungsverfahren dafür
Lunettes stéréoscopiques, dispositif d'affichage et leur procédé de commande

(30) Priority: 01.12.2009 KR 20090117898
(43) Date of publication of application: 29.06.2011
(73) Proprietor: Samsung Electronics Co., Ltd., Suwon-si, Gyeonggi-do, 443-742 (KR)
(72) Inventor: Kim, Do-youn, Seoul (KR)
(74) Representative: Fearnside, Andrew Simon

(56) References cited:
- EP-A2- 2 187 650
- US-A1- 2002 118 277

## Description

### BACKGROUND

### 1. Field

Apparatuses and methods consistent with the exemplary embodiments relate to stereoscopic glasses, a display device and a driving method of the same, and more particularly, to stereoscopic glasses, a display device and a driving method of the same which are related to displaying a three-dimensional (3D) image.

### 2. Description of the Related Art

Generally, a 3D image displayed on a display device such as a television (TV) or the like is based on binocular parallax. The binocular parallax is the biggest factor that gives a user stereoscopic feeling in viewing an object at a short distance. Shutter-type stereoscopic glasses may be used for a 3D image. In this case, the display device alternately displays a left eye image and a right eye image, and the shutter-type stereoscopic glasses are opened and shut in sync with the left eye image and the right eye image, thereby achieving a 3D image. Specifically, when the left eye image is displayed on a screen of the display device, a left eye shutter of the stereoscopic glasses is opened but a right eye shutter is closed. On the other hand, when the right eye image is displayed, the right eye shutter and the left eye shutter of the stereoscopic glasses are opened and shut, respectively.

To perform such an operation, the display device outputs a sync signal to the stereoscopic glasses. As the display device outputs a sync signal, the left eye shutter and the right eye shutter of the stereoscopic glasses are driven in sync with the sync signal. The sync signal is successively output with at regular intervals. For example, the sync signal alternates between high and low states at regular intervals. To successively output the sync signal, continuous power supply is required, thereby increasing power consumption. European patent application document EP-A-2187650 , published after the priority date of the present application, discloses a viewing system including a pair of 3D stereoscopic viewing glasses controlled according to a sync signal.

### SUMMARY

According to the present invention there is provided an apparatus and method as set forth in the appended claims. Other features of the invention will be apparent from the dependent claims, and the description which follows.

One or more exemplary embodiments provide a display device and a driving method of the same, in which a sync signal is selectively output so that power consumption is reduced in outputting the sync signal.

Another exemplary embodiment is to provide a display device having stereoscopic glasses of which a shutter unit can be driven without a sync signal, and a driving method of the same.

The foregoing and/or other aspects may be achieved by providing a display device including: a signal receiver which receives a video signal containing a left eye image and a right eye image; a signal processor which processes a video signal received from the signal receiver; a display unit which displays a stereoscopic image based on the video signal processed by the signal processor; a sync signal output unit which outputs a predetermined sync signal to external stereoscopic glasses so that a left eye shutter and a right eye shutter are opened and closed corresponding to the left eye image and the right eye image displayed on the display unit; a power supply which supplies power to the sync signal output unit; and a controller which outputs the sync signal at in initial mode , and after the initial mode, controls the sync signal output unit so that a power saving mode where the sync signal is not output and a check mode where the sync signal is output are alternately repeated ; and controls the power supply to stop supplying power to the sync signal output unit during the power saving mode.

The display device may further include stereoscopic glasses, the stereoscopic glasses including: a left eye shutter and a right eye shutter; and a glasses controller which determines a driving period for opening and closing the left eye shutter and the right eye shutter on the basis of the sync signal received at the initial mode, drives the left eye shutter and the right eye shutter on the basis of the driving period, and corrects an error of a current driving period on the basis of the sync signal received at the check mode.

The power saving mode may be longer than the check mode.

The power saving mode may be set by a unit of a minute.

Another aspect can be achieved by providing stereoscopic glasses including: a left eye shutter and a right eye shutter; a sync signal receiver which receives a sync signal corresponding to opening and closing of the left eye shutter and the right eye shutter from an external display device; and a controller which determines a driving period for opening and closing the left eye shutter and the right eye shutter on the basis of the sync signal if receiving the sync signal through the sync signal receiver, drives the left eye shutter and the right eye shutter in accordance with the sync signal and the driving period, and drives the left eye shutter and the right eye shutter on the basis of the determined driving period if receiving no sync signal through the sync signal receiver.

Still another aspect can be achieved by providing a driving method of a display device including a sync signal output unit that outputs a predetermined sync signal for opening and closing a left eye shutter and a right eye shutter to shutter-type stereoscopic glasses including the left eye shutter and the right eye shutter, the driving method including: outputting the sync signal to the external stereoscopic glasses at an initial mode; and alternately repeating a power saving mode, during which power is stopped from being supplied to the sync signal output unit so that the sync signal is not output, and a check mode, during which the sync signal is output, after the initial mode.

In another aspect of an exemplary embodiment, there is a viewing apparatus for viewing a stereoscopic image output by a display device, the viewing apparatus including: a left eye shutter; a right eye shutter; and a controller which controls a generating of driving signals for opening and closing the left and the right eye shutters, wherein the controller controls the generating of the driving signals during a first interval based on synchronization signals received from the display device, during a second interval when the synchronization signals are not received from the display device, and during a third interval when the synchronization signals are received from the display device, and wherein, during the third interval, the controller controls a period of the driving signals based on the synchronization signals received during the third interval.

Further, there is a receiver and a driving signal generating unit which initially generates the driving signal based on the synchronization signals received by the synchronization signal receiver during the first interval. Furthermore, the power is not supplied to the synchronization signal receiver during the second interval. Also, the second and the third periods alternatingly repeat. In an exemplary embodiment, a power consumption rate during the second interval that is less than a power consumption rate during the first interval, and less than a power consumption rate during the second interval

### BRIEF DESCRIPTION OF THE DRAWINGS

The above and/or other aspects will become apparent and more readily appreciated from the following description of the exemplary embodiments, taken in conjunction with the accompanying drawings, in which:

FIG. 1 is a control block diagram of a display device according to an exemplary embodiment;

FIG. 2 shows signal waveforms for explaining operation of a display device according to an exemplary embodiment;

FIG. 3 is a control flowchart for explaining the operation of the display device according to an exemplary embodiment;

FIG. 4 is a control block diagram of a display device according to another exemplary embodiment; and

FIG. 5 is a control flowchart for explaining the operation of the display device according to another exemplary embodiment.

### DETAILED DESCRIPTION OF EXEMPLARY EMBODIMENTS

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout.

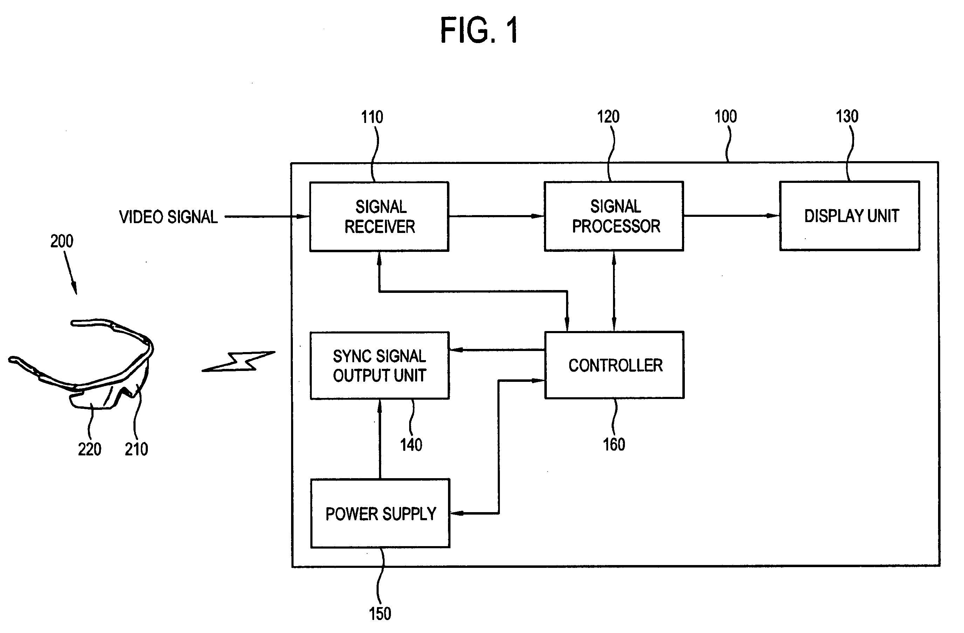

FIG. 1 is a control block diagram of a display device 100 according to an exemplary embodiment. The display device 100 in this exemplary embodiment may include by a television processing a broadcasting signal to be displayed, a monitor connected to a computer, or a portable terminal such as a mobile phone. The display device 100 may receive and display a two-dimensional (2D) video signal, i.e., a planar image signal, or may receive and display a three-dimensional (3D) video signal, i.e., a stereoscopic image signal. The 3D video signal is divided into a left eye image to be viewed by a left eye of a human and a right eye image to be viewed by a right eye, and the divided images are alternately displayed in sequence per frame.

Referring to FIG. 1, the display device 100 in this exemplary embodiment includes a signal receiver 110, a signal processor 120, a display unit 130, a synchronization (sync) signal output unit 140, a power supply 150 and a controller 160.

The signal receiver 110 receives a video signal alternately containing the left eye image and the right eye image. Further, the video signal received by the signal receiver 110 may include a broadcasting signal such as a digital television (DTV) signal, a cable broadcasting signal or the like. In this case, the signal receiver 110 may be tuned to a channel selected by a user and receive a broadcasting signal of the tuned channel under control of the controller 160. Also, the video signal received in the signal receiver 110 may include a signal output from a video source such as a digital versatile disc (DVD) player, a Bluray disc (BD) player, etc. Although it is not shown, the signal receiver 100 may receive an audio signal for outputting sound, a data signal for outputting data information, etc. In this exemplary embodiment, the video signal, the audio signal and the data signal may be received along with one broadcasting signal. According to another exemplary embodiment, the video signal may not be received from an external video source through the signal receiver 110, but include contents stored in an internal storage unit (not shown).

The signal processor 120 performs a predetermined signal process so that a received video signal containing a left eye image and a right eye image can be stereoscopically displayed on the display unit 130. The signal process performed in the signal processor 120 may include decoding, image enhancing, scaling, etc., with regard to the video signal. Also, the signal processor 120 may perform decoding or the like to the audio signal and the data signal as well as demultiplexing or the like for dividing the broadcasting signal received through the signal receiver 110 into a video signal, an audio signal and a data signal. In this case, the display device 100 may further include a sound output unit (not shown) such as a speaker for outputting sound based on an audio signal processed by the signal processor 120.

The display unit 130 displays an image based on a video signal processed by the signal processor 120. The display unit 130 may include a liquid crystal display (LCD) panel. In this case, the display unit 130 may further include a panel driver, a backlight, etc., which are not shown herein. The backlight may include a light source such as a light emitting diode (LED). The display unit 130 may display data information contained in the data signal processed by the signal processor 120.

The sync signal output unit 140 outputs a sync signal for opening and closing a left eye shutter 210 and a right eye shutter 220 of stereoscopic glasses 200 in response to a left eye image and a right eye image. The sync signal output unit 140 outputs the sync signal under control of the controller 160 and may include an emitter for outputting the sync signal as an infrared signal.

The power supply 150 supplies power to each element of the display device 100 in this exemplary embodiment as well as the sync signal output unit 140. For convenience, FIG. 1 shows that the power is supplied to the sync signal output unit 140 and the controller 160. The power supply 150 may stop supplying the power under control of the controller 160. If the sync signal output unit 140 does not output a sync signal, the power supply 150 stops supplying the power to the sync signal output unit 140.

The controller 160 generally controls the signal processor 120 or the like elements of the display device 100. Further, the controller 160 controls whether to output of the sync signal, whether to supply the power to each element, etc.

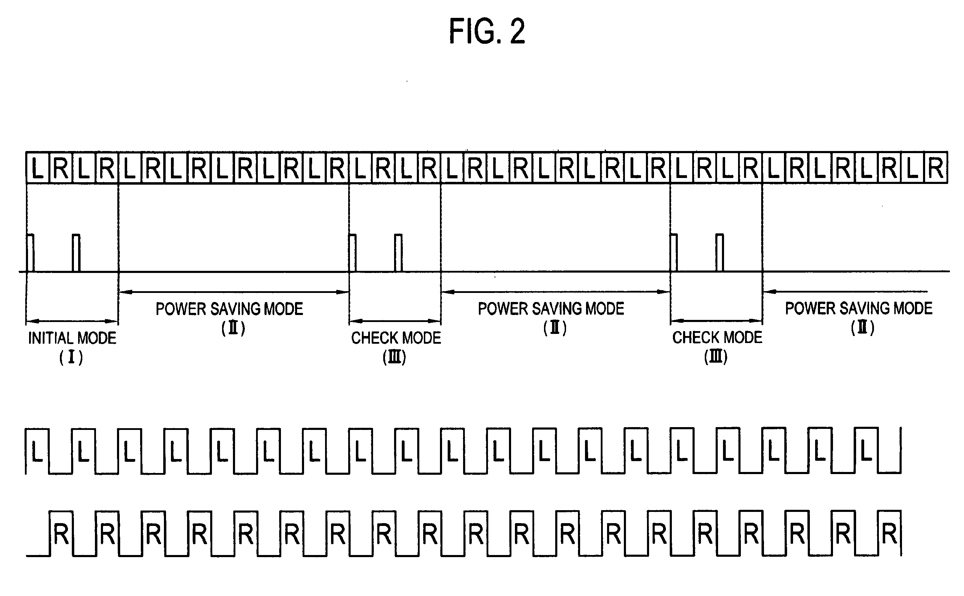

FIG. 2 shows signal waveforms for explaining operation of a display device according to an exemplary embodiment.

Referring to FIG. 2, the controller 160 controls a left eye image L and a right eye image R to be alternately displayed. Also, the controller 180 controls the sync signal output unit 140 to output a sync signal to the external stereoscopic glasses 200 in accordance with three modes. The controller 160 controls the sync signal output unit 140 to output a sync signal at an initial mode for a certain period of time during which the display device 100 is turned on and starts displaying a video signal on the display unit 130. After the initial mode, the controller 160 controls the sync signal output unit 140 such that a power saving mode during which no sync signal is output and a check mode during which the sync signal is output are alternately repeated. Also, the controller 160 controls the power supply 150 so that the power can be stopped from being supplied to the sync signal output unit 140 during the power saving mode.

As shown in FIG. 2, the left eye image L and the right eye image R are alternately displayed on the display unit 130. If a 2D video signal is displayed in 60 frames per second (s), a 3D video signal is displayed in 120 frames per second since it is divided into a left eye image and a right eye image. Below, a period of time during which the left eye image L and the right eye image R are displayed will be called a display period. Assume that the display period according to this exemplary embodiment is 1/120(s).

As shown in of FIG. 2, the sync signal output unit 140 outputs the sync signal whenever the left eye image L is displayed on the display unit 130 at the initial mode I. After the initial mode I, the sync signal is not output during the power saving mode II corresponding to a predetermined period of time. The sync signal output unit 140 outputs the sync signal again during the check mode III after the predetermined period of time elapses. The power saving mode II and the check mode III follow, so that the power saving modes and the check modes alternately repeat. An output period of the sync signal output at the initial mode I and the check mode III is 1/60(s), and this is twice the display period (1/120(s)). The stereoscopic glasses 200 set up a driving period during which the left eye shutter 210 and the right eye shutter 220 are opened and closed in response to the sync signal, and thus the left eye shutter 210 and the right eye shutter 220 are alternately opened and closed as shown in of FIG. 2. Only the left eye shutter 210 is opened when the left eye image L is displayed, while only the right eye shutter 220 is opened when the right eye image R is displayed. The driving period of the stereoscopic glasses 200 is set up to correspond to the display period of the video signal.

Under control of the controller 160, the stereoscopic glasses 200 sets up the driving period during the initial mode I and the sync signal is output so that opening and closing of the shutters 210 and 220 can be synchronized with display of the images L and R. That is, during the initial mode I, the opening and closing of the left and right eye shutters 210 and 220 of the stereoscopic glasses 200 are synchronized with the display of the left eye image L and the right eye image R displayed on the display unit 130.

Thereafter, the controller 160 controls the power supply 150 to stop supplying power to the sync signal output unit 140. During the power saving mode II, the stereoscopic glasses 200 may drive the left eye shutter 210 and the right eye shutter 220 according to the preset driving period.

Even during the power saving mode II where the sync signal is not output, the left eye shutter 210 and the right eye shutter 220 can be opened and closed, but the synchronization between the display of the images L and R and the opening and closing of the shutters 210 and 220 may becomes unmatched, or not be synchronized, as time goes on. That is, noise or the like factor may cause the timing when the left eye image L and the right eye image R are displayed to be different from the timing when the left eye shutter 210 and the right eye shutter 220 are opened and closed. To prevent this, the controller 160 controls the sync signal to be output in accordance with the output period (1/60(s)) during the check mode III. At this time, the controller 160 controls the power supply 130 to supply power to the sync signal output unit 140.

The stereoscopic glasses 200 correct the driving period on the basis of the sync signal output during the check mode III, and open and close the shutters 210 and 220 in sync with the display of the images L and R.

The power saving mode II, during which the power supplied to the sync signal output unit 140 is stopped, may be set to be longer than the check mode III to enhance efficiency of reducing power consumption. The power saving mode II may be set for several minutes, i.e., set by a unit of a minute. The initial mode I and the check mode III may be set for the same period of time or for different periods of time.

In brief, the display device 100 in this exemplary embodiment does not continuously output the sync signal after the initial mode I, but outputs the sync signal during only the check mode III corresponding to a certain section, thereby saving the power supplied to the sync signal output unit 140.

According to another exemplary embodiment, the output period of a sync signal may be equal to the display period of an image. If the sync signal is output by the same period as the display period, the stereoscopic glasses 200 may open and close the shutters 210 and 220 whenever receiving the sync signal.

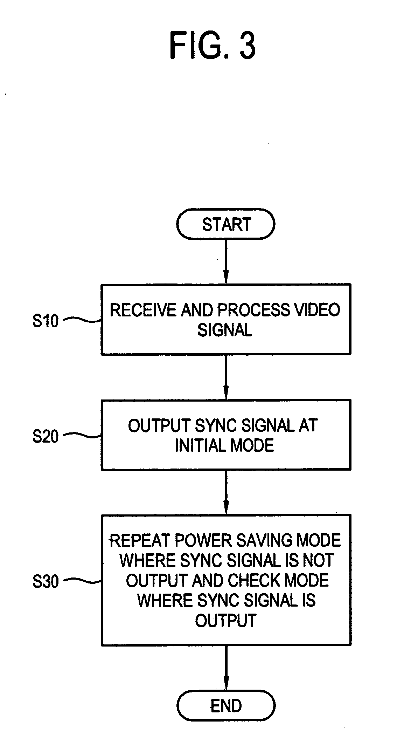

FIG. 3 is a control flowchart for explaining the operation of the display device 100 according to an exemplary embodiment.

First, at operation S10, if a video signal alternately containing a left eye image and a right eye image is input, the controller 160 controls the video signal to be processed so that an image can be displayed on the basis of the input video signal. At operation S20, the controller 160 continuously outputs the sync signal to the stereoscopic glasses 220 during the initial mode I. In sync with the output sync signal, the stereoscopic glasses 200 open and close the left eye shutter 210 and the right eye shutter 220 in accordance with the left eye image L and the right eye image R, respectively.

Then, at operation S30, the controller 160 controls the sync signal output unit 140 and the power supply 150 so that the power saving mode II during which the sync signal is not output and the check mode III during which the sync signal is output are alternately repeated. Since the power is stopped from being supplied to the sync signal output unit 140 during the power saving mode II, it is possible to reduce the power consumption.

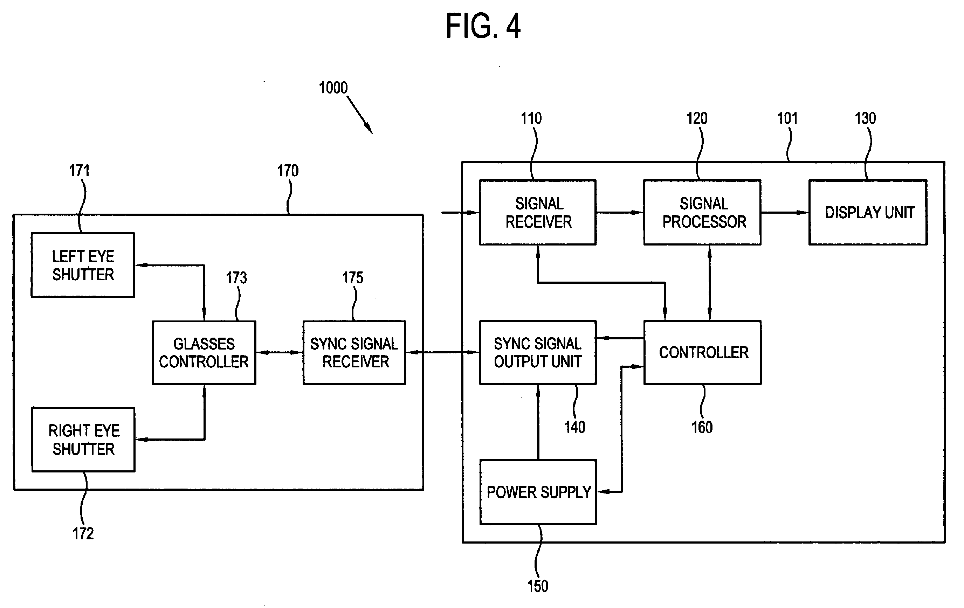

FIG. 4 is a control block diagram of a display device according to another exemplary embodiment. As shown therein, a display device 1000 includes a main body 101 where a stereoscopic image is displayed, and stereoscopic glasses 170. Elements included in the main body 101 are substantially the same as those shown in FIG. 1.

The stereoscopic glasses 170 include a left eye shutter 171, a right eye shutter 172, a sync signal receiver 175, and a glasses controller 173 controlling them.

The sync signal receiver 175 may be achieved by an infrared module that receives an infrared signal.

The glasses controller 173 determines the driving period for opening and closing the left eye shutter 171 and the right shutter 172 in sync with the sync signal when receiving the sync signal through the sync signal receiver 175, and drives the left eye shutter 171 and the right eye shutter 172 in accordance with the sync signal and the driving period. The glasses controller 173 may set the driving period for opening and closing the left eye shutter 171 and the right eye shutter 172 on the basis of the sync signal received during the initial mode I. For example, if the sync signal is received at 60Hz, the glasses controller 173 may set the driving period to 120Hz. Also, information about the driving period corresponding to the sync signal may be previously stored in the glasses controller 173, or may be received from the sync signal output unit 140 along with the sync signal.

Meanwhile, the glasses controller 173 drives the left eye shutter 171 and the right eye shutter 172 on the basis of the preset driving period if receiving no sync signal through the sync signal receiver 175. In other words, the left eye shutter 171 and the right eye shutter 172 are automatically opened and closed in accordance with the driving period even during the power saving mode II where the sync signal is not output.

At the check mode III where the sync signal is output, the glasses controller 173 determines the driving period on the basis of the received sync signal like the initial mode, and corrects an error of the current driving period. For example, if the driving period becomes shorter or longer and thus the opening and closing of the left eye shutter 171 and the right eye shutter 172 is unmatched with the display of the images L and R, it is possible to correct the driving period.

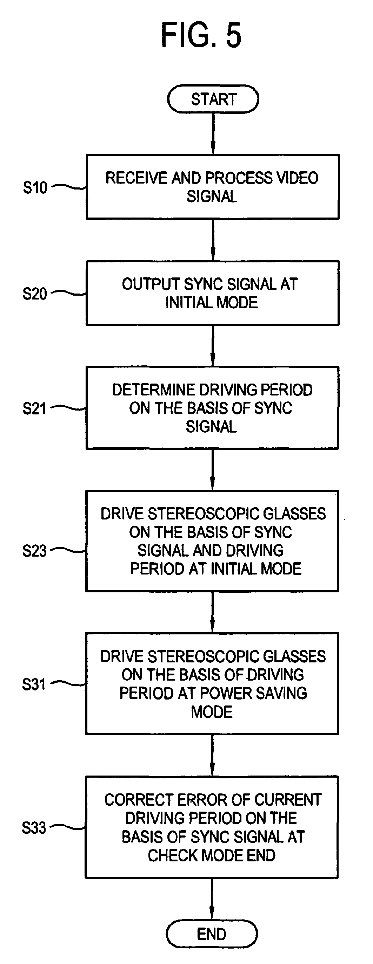

FIG. 5 is a control flowchart for explaining the operation of the display device according to another exemplary embodiment. Referring to FIG. 5, the operation of the display device in this exemplary embodiment is as follows.

First, like the operations S10 and S20 of FIG. 3, when a video signal alternately containing a left eye image and a right eye image is input, the controller 160 controls the video signal to be processed so that an image can be displayed on the basis of the input video signal at operation S10. At the initial mode I, the controller 160 continuously outputs the sync signal to the stereoscopic glasses 2000 at operation S20.

The glasses controller 173 determines the driving period for opening and closing the left eye shutter 171 and the right eye shutter 172 on the basis of the sync signal at operation S21, and drives the left eye shutter 171 and the right eye shutter 172 in accordance with the sync signal and the driving period at operation S23.

If the sync signal is not output to the stereoscopic glasses 170 in accordance with the power saving mode II, the glasses controller 173 drives the left eye shutter 171 and the right eye shutter 172 on the basis of the previously determined driving period at operation S31.

After the power saving mode II corresponding to a predetermined period of time, the controller 160 supplies power to the sync signal output unit 140 again so that the sync signal can be output to the stereoscopic glasses 200. During the check mode III, the glasses controller 173 corrects an error of the current driving period on the basis of the received sync signal and drives the left eye shutter 171 and the right eye shutter 172 in accordance with the corrected driving period at operation S33.

As described above, there are provided a display device and a driving method of the same, in which a sync signal is selectively output so that power consumption is reduced in outputting the sync signal.

Also, there are provided a display device having stereoscopic glasses of which a shutter unit can be driven without a sync signal, and a driving method of the same.

Although a few preferred embodiments have been shown and described, it will be appreciated by those skilled in the art that various changes and modifications might be made without departing from the scope of the invention, as defined in the appended claims.

## Claims

1. A display device comprising:
a signal receiver (110) arranged to receive a video signal containing a left eye image and a right eye image;
a signal processor (120) arranged to process the video signal received from the signal receiver;
a display unit (130) arranged to display a stereoscopic image based on the video signal processed by the signal processor;
a synchronization (sync) signal output unit (140) arranged to output a predetermined sync signal to stereoscopic glasses (200) so that a left eye shutter (210) and a right eye shutter (220) of the stereoscopic glasses are opened and closed according to the left eye image and the right eye image displayed on the display unit;
a power supply (150) arranged to supply power to the sync signal output unit; and **characterised by**:
a controller (160) arranged to control the sync signal output unit to output the sync signal in an initial mode, and after the initial mode, to control the sync signal output unit so that a power saving mode wherein the sync signal is not output and a check mode where in the sync signal is output are alternately repeated; and to control the power supply to stop supplying power to the sync signal output unit during the power saving mode.

2. The display device according to claim 1, further comprising stereoscopic glasses,
the stereoscopic glasses comprising:
a left eye shutter and a right eye shutter; and
a controller arranged to determine a driving period for opening and closing the left eye shutter and the right eye shutter based on the sync signal received during the initial mode, to drive the left eye shutter and the right eye shutter based on the driving period, and to correct an error of a current driving period based on the sync signal received during the check mode.

3. The display device according to claim 1, wherein the power saving mode is longer than the check mode.

4. The display device according to claim 3, wherein the duration of a power saving mode is set to be one or more units of time, the unit of time being a minute.

5. A driving method of a display device including a synchronization (sync) signal output unit that outputs a predetermined sync signal for opening and closing a left eye shutter (210) and a right eye shutter (220) of stereoscopic glasses (200) including the left eye shutter and the right eye shutter, the driving method **characterised by** comprising:
outputting the sync signal (S20) to the stereoscopic glasses at an initial mode; and after the initial mode,
alternately repeating a power saving mode (S30), during which power is not supplied to the sync signal output unit so that the sync signal is not output, and a check mode, during which the sync signal is output.

6. The driving method according to claim 5 further comprising:
receiving the sync signal at a pair of stereoscopic glasses including the left eye shutter and the right eye shutter;
determining a driving period for opening and closing the left eye shutter and the right eye shutter based on the sync signal received during the initial mode;
driving the left eye shutter and the right eye shutter based on the driving period; and
correcting an error of a current driving period based on the sync signal received during the check mode.

7. The driving method according to claim 5, wherein the power saving mode is longer than the check mode.

8. A viewing device for viewing a stereoscopic image output by a display device, the viewing apparatus comprising:
a left eye shutter (171);
a right eye shutter (172); and
a controller (173) arranged to control a generating of driving signals for opening and closing the left and the right eye shutters,
**characterised in that** the controller is arranged to control the generating and the driving period of the driving signals during a first interval based on synchronization signals received from the display device during the first interval, during a second interval when the synchronization signals are not received from the display device, and during a third interval based on synchronization signals received from the display device during the third interval, and
wherein during the third interval, the controller is arranged to correct an error of a curent driving period of the driving signals based on the synchronization signals received during the third interval.

9. The viewing device of claim 8, further comprising a synchronization signal receiver and a driving signal generating unit arranged to initially generate the driving signal based on the synchronization signals received by the synchronization signal receiver during the first interval.

10. The viewing device of claim 9, wherein power is not supplied to the synchronization signal receiver during the second interval.

11. The viewing device of claim 10, wherein the second and the third periods alternatingly repeat.

12. The viewing device of claim 10, wherein the viewing device has a power consumption rate during the second interval that is less than a power consumption rate during the first interval, and less than a power consumption rate during the second interval.

## Patentansprüche

1. Anzeigeeinrichtung, umfassend:
einen Signalempfänger (110), der dafür ausgelegt ist, ein Videosignal zu empfangen, das ein Linksaugenbild und ein Rechtsaugenbild enthält;
einen Signalprozessor (120), der dafür ausgelegt ist, das von dem Signalempfänger empfangene Videosignal zu verarbeiten;
eine Anzeigeeinheit (130), die dafür ausgelegt ist, auf der Basis des durch den Signalprozessor verarbeiteten Videosignals ein stereoskopisches Bild anzuzeigen;
eine Synchronisations- bzw. Sync-Signalausgabeeinheit (140), die dafür ausgelegt ist, ein vorbestimmtes Sync-Signal an stereoskopische Brillen (200) auszugeben, so dass ei n e Linksaugenblende (210) un d eine Rechtsaugenblende (220) der stereoskopischen Brillen gemäß dem Linksaugenbild und dem Rechtsaugenbild, das auf der Anzeigeeinheit angezeigt wird, geöffnet und geschlossen werden;
eine Stromversorgung (150), die dafür ausgelegt ist, die Sync-Signalausgabeeinheit mit Strom zu versorgen; und **gekennzeichnet durch**
eine Steuerung (160), die dafür ausgelegt ist, die Sync-Signalausgabeeinheit zu steuern, um das Sync-Signal in einem Anfangsmodus auszugeben und nach dem Anfangsmodus di e Sync-Signalausgabeeinheit s o zu steuern, dass ein Stromsparmodus, wobei das Sync-Signal nicht ausgegeben wird, und ein Prüfmodus, wobei das Sync-Signal ausgegeben wird, abwechselnd wiederholt werden; und die Stromversorgung zu steuern, um während d e s Stromsparmodus aufzuhören, d i e Sync-Signalausgabeeinheit mit Strom zu versorgen.

2. Anzeigeeinrichtung nach Anspruch 1, die ferner stereoskopische Brillen umfasst, wobei die stereoskopischen Brillen Folgendes umfassen:
eine Linksaugenblende und eine Rechtsaugenblende; und
eine Steuerung, die dafür ausgelegt ist, auf der Basis des während des Anfangsmodus empfangenen Sync-Signals eine Ansteuerperiode zum Öffnen und Schließen der Linksaugenblende un d de r Rechtsaugenblende zu bestimmen, auf der Basis der Ansteuerperiode die Linksaugenblende und die Rechtsaugenblende anzusteuern und auf der Basis des während des Prüfmodus empfangenen Sync-Signals ei n e n Fehl e r ei n e r aktuellen Ansteuerperiode zu korrigieren.

3. Anzeigeeinrichtung nach Anspruch 1, wobei der Stromsparmodus länger als der Prüfmodus ist.

4. Anzeigeeinrichtung nach Anspruch 3, wobei die Dauer des Stromsparmodus auf eine oder mehrere Zeiteinheiten eingestellt wird, wobei die Zeiteinheit eine Minute ist.

5. Ansteuerverfahren einer Anzeigeeinrichtung mit einer Synchronisations- bzw. Sync-Signalausgabeeinheit, die ein vorbestimmtes Sync-Signal zum Öffnen und Schließen einer Linksaugenblende (210) und einer Rechtsaugenblende (220) von stereoskopischen Brillen (200), d i e di e Linksaugenblende un d die Rechtsaugenblende enthalten, ausgibt, wobei das Ansteuerverfahren **dadurch gekennzeichnet ist, dass** es Folgendes umfasst:
Ausgeben des Sync-Signals (S20) an die stereoskopischen Brillen in ei n e m Anfangsmodus; und na c h dem Anfangsmodus
abwechselndes Wiederholen eines Stromsparmodus (S30), während dem die Sync-Signalausgabeeinheit nicht mit Strom versorgt wird, so dass das Sync-Signal nicht ausgegeben wird, und eines Prüfmodus, während dem das Sync-Signal ausgegeben wird.

6. Ansteuerverfahren nach Anspruch 5 , ferner umfassend:
Empfangen des Sync-Signals in einer stereoskopischen Brille, di e di e Linksaugenblende un d die Rechtsaugenblende enthält;
Bestimmen einer Ansteuerperiode zum Öffnen und Schließen de r Linksaugenblende u n d der Rechtsaugenblende auf de r Basis des während des Anfangsmodus empfangenen Sync-Signals;
Ansteuern der Linksaugenblende und der Rechtsaugenblende auf der Basis der Ansteuerperiode; und
Korrigieren des Fehlers einer aktuellen Ansteuerperiode auf der Basis des während des Prüfmodus empfangenen Sync-Signals.

7. Ansteuerverfahren nach Anspruch 5, wobei der Stromsparmodus länger als der Prüfmodus ist.

8. Betrachtungseinrichtung zum Betrachten eines durch eine Anzeigeeinrichtung ausgegebenen stereoskopischen Bildes, wobei die Betrachtungsvorrichtung Folgendes umfasst:
eine Linksaugenblende (171);
eine Rechtsaugenblende (172); und
eine Steuerung (173), die dafür ausgelegt ist, ein Erzeugen von Ansteuersignalen zum Öffnen und Schließen der Links- und der Rechtsaugenblende zu steuern,
**dadurch gekennzeichnet, dass** die Steuerung dafür ausgelegt ist, das Erzeugen und die Ansteuerperiode der Ansteuersignale während eines ersten Intervalls auf der Basis von Synchronisationssignalen, die während des ersten Intervalls aus der Anzeigeeinrichtung empfangen werden, während eines zweiten Intervalls, wenn die Synchronisationssignale ni c h t au s der Anzeigeeinrichtung empfangen werden, und während eines dritten Intervalls au f de r Ba s i s von Synchronisationssignalen, die während des dritten Intervalls aus der Anzeigeeinrichtung empfangen werden, zu steuern und
wobei die Steuerung während des dritten Intervalls dafür ausgelegt ist, einen Fehler einer aktuellen Ansteuerperiode der Ansteuersignale auf der Basis der während des dritten Intervalls empfangenen Synchronisationssignale zu korrigieren.

9. Betrachtungseinrichtung nach Anspruch 8, die ferner einen Synchronisationssignalempfänger und eine Ansteuersignal-Erzeugungseinheit umfasst, di e dafür ausgelegt ist, anfänglich das Ansteuersignal auf der Basis des während des ersten Intervalls durch den Synchronisationssignalempfänger empfangenen Synchronisationssignals zu erzeugen.

10. Betrachtungseinrichtung nach Anspruch 9, wobei der Synchronisationssignalempfänger während des zweiten Intervalls nicht mit Strom versorgt wird.

11. Betrachtungseinrichtung nach Anspruch 10, wobei sich die zweite und die dritte Periode abwechselnd wiederholen.

12. Betrachtungseinrichtung nach Anspruch 10, wobei die Betrachtungseinrichtung während de s zweiten Intervalls eine Stromverbrauchsrate aufweist, die kleiner als eine Stromverbrauchsrate während des ersten Intervalls und kleiner als eine Stromverbrauchsrate während des zweiten Intervalls ist.

## Revendications

1. Dispositif d'affichage comprenant :
un récepteur de signal (110) conçu pour recevoir un signal vidéo contenant une image d'oeil gauche et une image d'oeil droit ;
un processeur de signal (120) conçu pour traiter le signal vidéo reçu du récepteur de signal ;
une unité d'affichage (130) conçue pour afficher un image stéréoscopique sur la base du signal vidéo traité par le processeur de signal ;
une unité de sortie de signal de synchronisation (sync) (140) conçue pour fournir en sortie un signal de synchronisation prédéterminé à de s lunettes stéréoscopiques (200) de manière à ce qu'un obturateur d'oeil gauche (210) et un obturateur d'oeil droit (220) des lunettes stéréoscopiques s'ouvrent et se ferment conformément à l'image d'oeil gauche et à l'image d'oeil droit affichées sur l'unité d'affichage ;
une alimentation électrique (150) conçue pour alimenter e n courant l'unité de sortie de signal de synchronisation ; et **caractérisé par** :
une unité de commande (160) conçue pour commander l'unité de sortie de signal de synchronisation afin qu'elle fournisse en sortie le signal de synchronisation dans un mode initial, et, après le mode initial, afin qu'elle commande l'unité de sortie de signal de synchronisation de manière à ce qu'un mode d'économie d'énergie dans lequel le signal de synchronisation n'est pas fourni en sortie et un mode d e vérification dans lequel 1 e signal de synchronisation est fourni en sortie soient répétés en alternance ; et po u r commander l'alimentation électrique afin qu'elle cesse d'alimenter en courant l'unité de sortie de signal de synchronisation pendant le mode d'économie d'énergie.

2. Dispositif d'affichage selon la revendication 1, comprenant en outre des lunettes stéréoscopiques, les lunettes stéréoscopiques comprenant :
un obturateur d'oeil gauche et un obturateur d'oeil droit ; et
une unité de commande conçue pour déterminer une période d'attaque pour l'ouverture et la fermeture de l'obturateur d'oeil gauche et de l'obturateur d'oeil droit sur la base du signal de synchronisation reçu pendant le mode initial, pour attaquer l'obturateur d'oeil gauche et l'obturateur d'oeil droit sur la base de la période d'attaque, et pour corriger une erreur affectant une période d'attaque courante sur la base du signal de synchronisation reçu pendant le mode de vérification.

3. Dispositif d'affichage selon la revendication 1, dans lequel le mode d'économie d'énergie est plus long que le mode de vérification.

4. Dispositif d'affichage selon la revendication 3, dans lequel la durée d'un mode d'économie d'énergie est réglée à une ou plusieurs unités de temps, l'unité de temps étant d'une minute.

5. Procédé d'attaque d'un dispositif d'affichage comprenant une unité de sortie d e signal de synchronisation (sync) un signal de synchronisation prédéterminé pour ouvrir et fermer un obturateur d'oeil gauche (210) et un obturateur d'oeil droit (220) de lunettes stéréoscopiques (200) comprenant l'obturateur d'oeil gauche et l'obturateur d'oeil droit, le procédé d'attaque étant **caractérisé en ce qu'**il comprend :
la fourniture en sortie du signal de synchronisation (S20) aux lunettes stéréoscopiques dans un mode initial ; et, après le mode initial,
la répétition alternée d'un mode d'économie d'énergie (S30), pendant lequel aucune courant n'est délivré à l'unité de sortie de signal de synchronisation de manière à ce que le signal de synchronisation ne soit pas fourni en sortie et un mode de vérification, pendant lequel le signal de synchronisation est fourni en sortie.

6. Procédé d'attaque selon la revendication 5, comprenant en outre :
la réception du signal de synchronisation sur une paire de lunettes stéréoscopiques comprenant l'obturateur d'oeil gauche et l'obturateur d'oeil droit ;
la détermination d'une période d'attaque pour l'ouverture et la fermeture de l'obturateur d'oeil gauche et de l'obturateur d'oeil droit sur la base du signal de synchronisation reçu pendant le mode initial ;
l'attaque de l'obturateur d'oeil gauche et de l'obturateur d'oeil droit sur la base de la période d'attaque ; et
la correction d'une erreur affectant une période d'attaque courante sur la base du signal de synchronisation reçu pendant le mode de vérification.

7. Procédé d'attaque selon la revendication 5, dans lequel le mode d'économie d'énergie est plus long que le mode de vérification.

8. Dispositif d e visualisation destiné à visualiser une image stéréoscopique fournie en sortie p a r un dispositif d'affichage, l'appareil de visualisation comprenant :
un obturateur d'oeil gauche (171) ;
un obturateur d'oeil droit (172) ; et
une unité de commande (173) conçue pour commander une production de signaux d'attaque pour ouvrir et fermer les obturateurs d'oeil gauche et d'oeil droit,
**caractérisé en ce que** l'unité de commande est conçue pour commander la production et la période d'attaque des signaux d'attaque pendant un premier intervalle sur la base de signaux de synchronisation reçus du dispositif d'affichage pendant le premier intervalle, pendant un deuxième intervalle lorsque les signaux de synchronisation ne sont pas reçus du dispositif d'affichage, et pendant un troisième intervalle sur la base de signaux de synchronisation reçus du dispositif d'affichage pendant le troisième intervalle, et
dans lequel, pendant le troisième intervalle, l'unité de commande est conçue pour corriger une erreur affectant une période d'attaque courante des signaux d'attaque sur la base des signaux de synchronisation reçus pendant le troisième intervalle.

9. Dispositif de visualisation selon la revendication 8, comprenant en outre un récepteur de signal de synchronisation et une unité génératrice de signal d'attaque conçue pour générer initialement le signal d'attaque sur la base de s signaux de synchronisation reçus par le récepteur de signaux de synchronisation pendant le premier intervalle.

10. Dispositif de visualisation selon la revendication 9, dans lequel aucun courant n'est fourni au récepteur de signaux de synchronisation pendant le deuxième intervalle.

11. Dispositif de visualisation selon la revendication 10, dans lequel les deuxième et troisième périodes se répètent de manière alternée.

12. Dispositif de visualisation selon la revendication 10, dans lequel le dispositif de visualisation présente un e consommation d'énergie, pendant le deuxième intervalle, qui est inférieure à la consommation d'énergie pendant le premier intervalle, et qui est inférieure à une consommation d'énergie pendant le deuxième intervalle.
